# NEW EUROPEAN PATENT SPECIFICATION

(11) **EP 0 220 346 B2**
(45) Date of publication and mention of the opposition decision: **25.10.1995**
(45) Mention of the grant of the patent: 27.12.1989
(21) Application number: 85307548.9
(22) Date of filing: 18.10.1985
(51) Int. Cl.: C01B 33/44

(54) **Process for manufacturing organoclays having enhanced gelling properties**
Verfahren zur Herstellung von Organotonen mit Gelbildungseigenschaften
Procédé de fabrication d'organoargiles à propriétés gélifiantes

(43) Date of publication of application: 06.05.1987
(60) Divisional application: 88109351.2
(73) Proprietor: SOUTHERN CLAY PRODUCTS, INC., Gonzales, TX 78629 (US)
(72) Inventor: Jones, Thomas Richard, Cornwall PL25 4BJ (GB); Knudson, Milburn I., Gonzales, Texas 78629 (US)
(74) Representative: Green, Mark Charles

(56) References cited:
- EP-A- 0 160 514
- EP-A- 0 215 575
- FR-A- 2 226 360
- GB-A- 1 439 828
- GB-A- 2 025 914
- US-A- 2 206 633
- US-A- 3 348 778
- US-A- 3 574 345
- US-A- 4 371 626
- US-A- 4 422 855
- US-A- 4 469 639

## Description

This invention relates generally to organophilic clays (hereinafter referred to as "organoclays"), and more specifically relates to an improved process for manufacture of same, which process strikingly enhances the gelling properties of the said products.

Organoclays, representing the reaction product of a smectite-type clay with a higher alkyl-containing quaternary ammonium compound, have long been known for use in gelling of organic liquids such as lubricating oils, linseed oil, toluene and the like. A large variety of highly useful products, such as lubricating greases are producible through use of such gelling agents. The procedures and chemical reactions pursuant to which these organoclays are prepared, are well-known. Thus, under appropriate conditions, the organic compound which contains a cation, will react by ion exchange with clays which contain a negative layer lattice and exchangeable cations to form the organoclay products. If the organic cation contains at least one aikyl group containing at least 10 carbon atoms, then the resultant organoclays will have the property of swelling in certain organic liquids.

Among the prior art patents which discuss at length aspects of the preparation and properties of organoclays, as above outlined, are U.S. Patents No. 2 531 427; 2 966 506; 3 974 125; 3 537 994; and 4 081 496. Reference may also be had to applicable portions of the standard reference work "Clay Mineralogy", 2nd Edition, 1968, by Ralph e. Grim, Mc-Graw Hill Book Company.

In the usual procedure for preparing an organophilic clay pursuant to this prior art, the smectite-type clay, selected, quaternary compound and water are mixed together, preferably at an elevated temperture, typically in the range of 100°F (33°C to 82°C), for a period of time sufficent for the organic quaternary ammonium compound to coat the clay particles. Thereafter, the product can be filtered, washed, dried and ground, or otherwise processed, depending upon the intended use. In some instances, e.g., the drying and grinding step may be omitted. Various other modifications of this process may be used depending upon the form of product desired - as will be noted in the referenced patents.

US 4 081 496 and US 4 116 866 disclose, in cursory fashion, the use of a pug mill or extruder for shearing an aqueous clay slurry, in order to facilitate a reaction wherein a bentonite-type clay is to be converted to sodium form, by reaction with a soluble sodium compound.

EP 0 160 514 and EP 0 215 575, which are relevant under Article 54(3) EPC only, each disclose a method of purifying a crude smectite-type clay and treating the purified clay with a higher alkyl-containing quaternary ammonium compound to form an organoclay after earlier having subjected the purified clay to high speed fluid shear.

GB 1 439 828 (equivalent to FR 2 226 360) discloses a process in which an organoclay is prepared by reacting a smectite-type clay with an onium compound. The clay may be dispersed in water by mixing a suspension of the clay at high shear to reduce the particle size. The dispersion thus formed may then be mixed with a dispersion of the onium compound.

According to the present invention, there is provided a method for treating a crude smectite-type clay to produce an organoclay having enhanced gelling properties, comprising the steps of:
a) dispersing the crude clay in water to form an aqueous suspension
b) separating non-clay components and abrasive elements from the suspension; and
c) reacting the thus-formed suspension of clay with a higher alkyl-containing quaternary ammonium compound to form an organo-clay without subjecting the clay/quaternary compound mixture to high speed fluid shear;
characterized in that the suspension of crude clay in water has a solids content of less than 10% by weight and in that prior to reaction of the clay with the ammonium compound, the suspension of clay is subjected to high speed fluid shear as a pumpable slurry by passing the suspension through a narrow gap across which a pressure differential of at least 1000 p.s.i.g. (7 MPa) is maintained.

The high speed fluid shear to which the smectite-type clay is subjected in accordance with one aspect of the process of this invention, is effected by passing the pumpable slurry through a dispersion or colloid mill having a narrow gap across which a pressure differential may be maintained. Such devices are often referred to in the art as "homogenizers". Dispersion and colloid mills are thus well-known in the art, and are succinctly discussed and characterized at pages 842 and 843 of "Chemical Engineers Handbook", edited by R.H. Perry and C.H. Chilton, 5th Edition, 1973, Mc Graw Hill Book Company (New York). As is pointed out in this standard reference work, this type of device constitutes a special class of mills normally employed for dispersion and colloidal operations. Such mills operate on a principle of high speed fluid shear. The mills for use in the present invention are characterized by including or defining a narrow gap across which a pressure differential is maintained and through which in accordance with the invention the pumpable slurry is passed.

The high speed fluid shear is effected by passing the slurry at high velocities through a narrow gap, across which a high pressure differential is maintained. This type of action, e.g., can be effected in the well-known Manton-Gaulin mill, which device is sometimes referred to as the "Gaulin homogenizer". In the basic operation of such device, a reciprocating, positive displacement piston-type pump is provided with a homogenizing valve assembly which is affixed to the pump discharge. The unhomogenized product enters the valve area at high pressure and low velocity. As it passes through a narrow orifice at the valve, (which is a close-clearance area between the valve and valve seat), its velocity is increased to levels approaching sonic. This provides high shear forces for reduction, and in the said device, these forces are further implemented as this high velocity stream strikes an impact ring where its direction is changed. Of further interest in this connection, is US 3 348 778 which discloses the use of a Manton-Gaulin type arrangement for treating kaolin clays in order to improve the rheology of a clay-water system subsequently formed from same. For present purposes, the patent is of interest in disclosing certain useful arrangements for the said mill, and further details of the construction of same. The patent also discusses the gap provided in the mills of the type disclosed, and properly observes that such gap is only a fraction of an inch, usually of the order of .001 to .005 inch (0.025 to 0.125mm), but under certain conditions may be as large as 0.09 inch (2.25mm) or even 0.1 inch (2.5mm).

The pressure differential across the gap is preferably no greater than 8000 p.s.i.g. (56 MPa) with 4,000 to 6,000 p.s.i.g. (28 to 42 MPa) being more typical in representative operations. Depending upon the specifics of the equipment, pressures higher than 8,000 p.s.i.g. (56 MPa) can readily be used.

The said pumpable slurry should include less than 10% by weight of solids. Below this level, the slurry will be pumpable, so that it is capable of being subjected to the aforementioned high speed fluid shear.

The precise manner in which the high energy treatment in accordance with the invention acts to enable the remarkable improvements in gelling properties is not fully understood. Among other things, however, it has been found that such treatment has a mated effect on the average particle size of the clay. It, thus, has been determined that where a bentonite-type feed sample having an average particle size of 0.756 microns is passed through a Manton-Gaulin mill where the energy input was 210 HP-hours per ton (621 kJ.kg⁻¹) of clay, the average particle size was reduced to 0.438 micrometers. In a second instance, the average particle size of the clay was reduced from 0.756 micrometers to 0.352 micrometers when the energy input was 700 horsepower hours per ton (2071 kJ.kg-¹) of clay. This data indicates a very substantial average particle size reduction, and is one consequence of the treatment of the clay. (These data are weight average particle size of the bentonite dispersed in water, as measured on a "Nanosizer" apparatus marketed by Coulter).

The smectite-type clays which are subjected to the improved process of this invention, are precisely those which have been conventionally utilized in the prior art in the preparation of organoclays as aforementioned. These are smectite-type clays which have a cation exchange capacity of at least 75 milliequivalents per 100 grams of clay. Useful clays for such purposes include the naturally occuring Wyoming variety of swelling bentonite and similar clays, and hectorite, which is a swelling magnesium-lithium silicate clay. The clays are preferably converted to the sodium form if they are not already in this form. This can be effected, again as is known in the art, by a cation exchange reaction, or the clay can be converted via an aqueous reaction with a soluble sodium compound.

Smectite-type clays prepared synthetically can also be utilized, such as montmorillonite, bentonite, beidelite, hectorite-saponite, and stevensite.

In a typical procedure pursuant to the invention, the crude smectite-type clay, as for example a bentonite, is initially dispersed in water at less than 10% by weight of solids. The slurry is then screened and centrifuged to remove non-clay components and especially abrasive elements such as quartz. Removal of these abrasive elements is essential as the slurry is to be subjected to shearing forces by passing through a narrow gap as in the Manton-Gaulin mill. Were such abrasives present, the orifice channel and attendant portions of the mill would rapidly become damaged.

The fine fraction from the centrifuge, which typically includes 4 to 5% solids, is then subjected to high speed fluid shear in accordance with the invention. As aforementioned, the said slurry may be passed through a Manton-Gauiin homogenizer in which pressures of at least 1000 psig (7 MPa) to preferably 8000 psig (56 MPa) are maintained across the gap, and pressures of 4000 to 6000 p.s.i.g. (28 to 42 MPa) are typical. The output clay product from the high speed fluid shear step is then subjected to the conventional reaction with the quaternary amine.

The fine fraction from the centrifuge is then subjected to the conventional reaction with the quaternary amine.

The reaction of the high speed fluid-sheared clay with the amine is effected by the conventional procedures described at great length in the prior art, including in the previously mentioned patents.

The organic compounds which are reacted with the treated clay are quaternary ammonium salts, where the salt anion is preferably chloride or bromide or mixtures thereof, and is more preferably chloride ion. The salt anion may also, however, be nitrate, hydroxyl, acetate, or mixtures of these. Any of such compounds as are known to be useful in producing organoclay gellants of the type herein discussed may be used in this aspect of the invention, specifically including the compounds so reported useful in the patents heretofore cited. Among others these include dimethyl di(hydrogenated tallow), dimethyl benzyl hydrogenated tallow, dibenzyl dialkyl, methyl benzyl dialkyl, and trimethyl hydrogenated tallow salts.

Pursuant to the improvements yielded by the invention, the gelling characteristics i.e. the gelling efficiency of the clays treated by the invention, are so markedly enhanced, as to make possible use of quantities of the gelling agent to achieve a given result, which are reduced in comparison to the amount which would be required in the absence of the invention. Further clays, such as certain deposits of bentonite-type clays which heretofore had been considered unacceptable as crude materials for use in preparing suitable gellants, are found when treated by the process of the invention, to yield organoclay gelling agents which are fully acceptable for use in gelling organic liquids or the like. A net effect of the invention in this regard, is therefore to enable highly effective use of crude deposits previously deemed not usable for these purposes, thereby vastly expanding the possible sources of raw materials which can be used to produce the final gellant products.

For a better understanding of the present invention, reference will now be made to the accompanying drawings in which:
Figure 1 is a graph comparing the effects of gelling a diesel fuel with an organoclay prepared by the process of the invention, with an organoclay which has been conventionally processed:
Figure 2 is a graph similar to figure 1 and illustrating the comparative results achieved where an organoclay in accordance with the invention, and a control untreated organoclay, are each used in the gelling of odorless mineral spirits;
Figure 3 is a further graph similar to the foregoing graphs, and illustrating comparable data for toluene gel.
Figure 4 is a further graph of the same character as the prior graphs, illustrating gelling effects in a further odorless mineral spirits, where the starting crude clay is of relatively poor quality; and
Figure 5 is a graph of the same character as in Figure 4, but illustrating comparative data for viscosity measurements of a toluene gel.

The invention will now be illustrated by a series of Examples, which are intended to set forth typical and preferred procedures to be utilized in practice of the process of the invention.

### Example I

In this Example, the smectite-type clay utilized as a starting material was a Wyoming bentonite. The crude bentonite was initially dispersed in water at 7% solids by weight. The slurry was thereupon screened, and then centrifuged to remove non-clay components and especially abrasive elements such as quartz. The fine fraction from the centrifuge, which then included approximately 4 to 5% solids by weight, was divided into two portions. One such portion served as a control sample. The second portion, in accordance with the invention, was passed through a Manton-Gauiin homogenizer, wherein pressures of 5000 p.s.i.g. were maintained across the gap of the said apparatus. The control and the sheared samples, were each divided into further portions, which were reacted with the salt of a dimethyl di(hydrogenated tallow) amine. The ratio of amine to clay was varied in the samples from 85 to 105 milliequivalents per 100 grams of clay on a 100% active clay basis. The amine was stirred into the approximately 4 to 5% solids slurry at 60°C, with stirring being continued for approximately 1/2 hour, after which the material was filtered, washed with water and dried at 60°C. The dried material was pulverized with a Mikropul mill to approximately 95% less than 200 mesh. Tests were then conducted to determine the gelling properties of each of the control and invention samples.

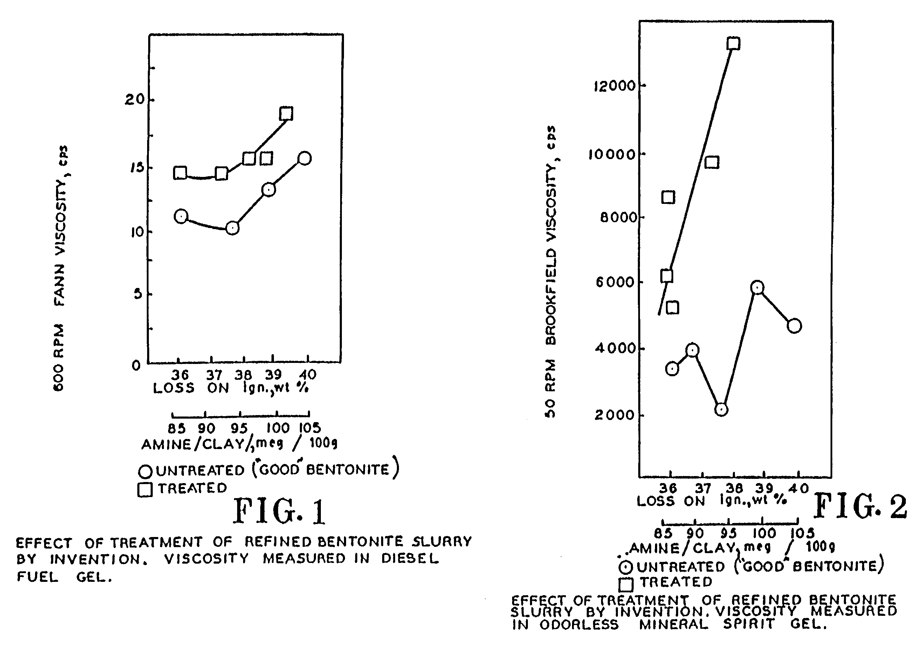

In Figure 1 herein, Fann viscosity in cps is plotted as a function of milliequivalents of the amine added to the clay for the untreated bentonite samples. i.e., the prior art samples, and for the sample treated in accordance with the invention. (Loss on ignition is also plotted as abscissa, which is a measure of he organics combined with the clay). The type of bentonite utilized in this example is considered by those skilled in the art to be relatively "good" for use in preparing organoclay gellants. Viscosity measurements were effected by measuring a quantity of diesel oil into a multi-mixer can. In each instance, the sample to be evaluated was added to the diesel oil with stirring, after which water was stirred into the mix, the can removed from the mixer, and placed on the Fann viscometer, and the 600 and 300 rpm readings obtained. Gel readings were obtained after 10 seconds. It will be apparent that a vast improvement in viscosity of the gelled diesel fuel is evidenced across all ranges of the amine-to-clay ratio where the method of the invention is used.

### Example II

In this instance, the same procedure was utilized as in Example I, except that the effect of the invention on the gellant were evaluated by admixing same with odorless mineral spirits (OMS). In the said procedure, a fixed quantity of the odorless mineral spirits were transferred to a container and the temperature is established for same. A small quantity of 100% propylene carbonate was added to the mixture, while stirring. Next, a specified quantity of the sample to be evaluated was transferred to the container, followed by vigorous stirring. The mixture was blunged with a Cowles blade for two minutes and the gel stirred for 10 revolutions with a spatula. The container was covered and the gel allowed to remain in a constant temperature bath at 24°C. + or -1°C for two hours, after which the gel viscosity was measured on a Brookfield viscometer. The resulting data is plotted in Figure 2, and establishes even a more remarkable difference between the treated and untreated organoclays with respect to their ability to gel the said odorless mineral spirits.

### Example III

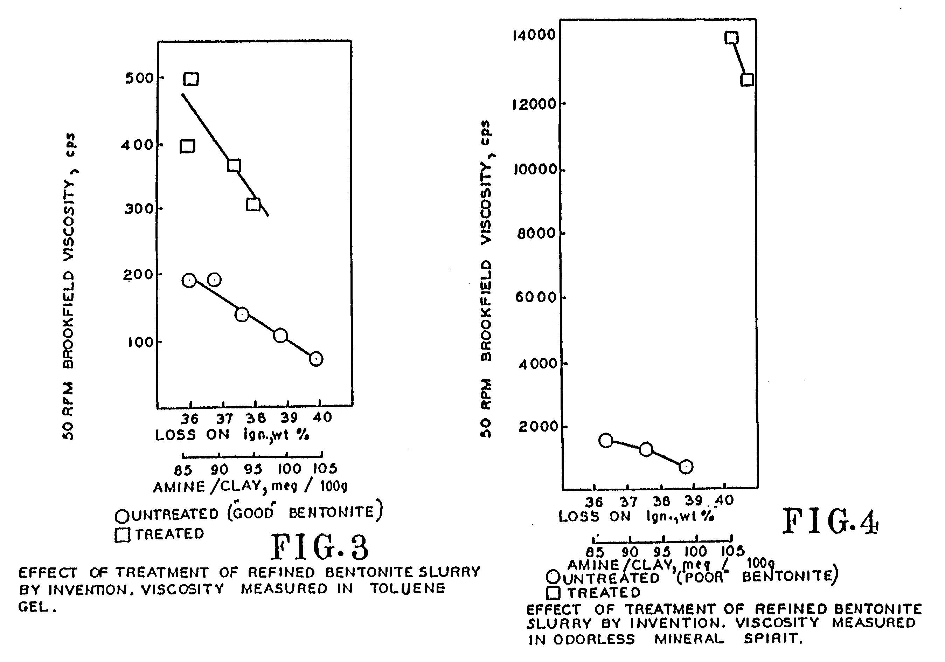

In Figure 3, the same material as in Exampies I and II, resulting from the present invention is evaluated for its gelling characteristics in toluene. In this procedure, 6 grams of the organoclay was admixed with 340 ml of toluene by use of a Waring bender. 2.3 ml of a polar dispersant was then added. consisting of 95% by weight methanol and 5% by weight of deionized water, and additional blending carried out. (In general, small proportions of polar compounds may be added to develop maximum viscosity. Typical polar activators are water, methanol, and propylene carbonate). The contents were then poured into a container, allowing the gel to flow very thinly over the container lip, thus allowing any air bubbles to escape. The container was maintained in a water bath at 74°C + or -1°F, for two hours, after which Brookfieid viscosity readings were obtained. Once again, Figure 3 illustrates the striking improvements yielded by practice of the invention.

### Example IV

In this Example, the same procedure was utilized as in Example I for purposes of preparing the modified bentonite, except the bentonite sample utilized herein differed from that in Example I in being a crude of a type normally regarded as "poor" for producing an organoclay gelling agent. The same procedures as aforementioned were used in treating odorless mineral spirits. The data yielded is set forth in Figure 4. It is clear that the process of the invention has yielded a remarkable increase in gelling capacity for the material treated by the invention. Indeed, as mentioned, the said bentonite crude would, where processed by conventional techniques, be regarded as an unacceptable geilant, whereas the organoclay yielded by the process of the invention is a completely accpetable product.

### Example V

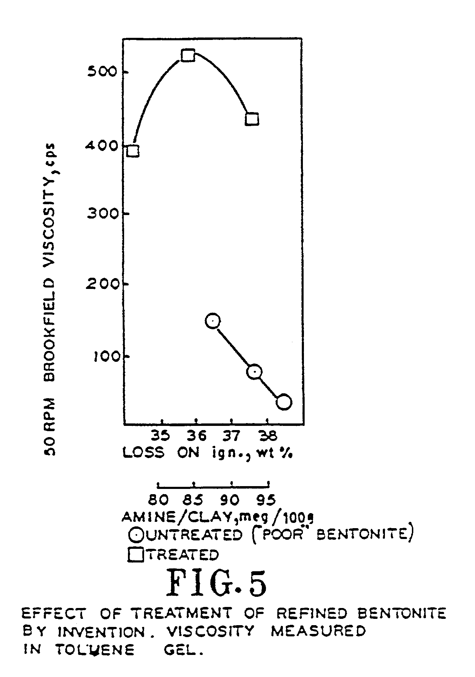

In this Example, a further so-called "poor" bentonite was processed in accordance with the invention and in accordance with prior art, and the effects upon gelling of toluene were established by the procedures of Example III. The graphical showing of Figure 5 illustrates the same consequences, as discussed for Example IV; i.e., that by the process of the invention, a remarkable improvement in the gelling properties of an otherwise poor bentonite have been achieved, resulting in a highly usable material in place of a material which heretofore was unacceptable for preparation of organoclays intended for use as gelling agents.

The Manton-Gaulin mill allows the product to enter an expansion valve at a very high pressure and low velocity. As the product enters the close clearance area between the valve and the valve seat there is a rapid increase in velocity to the order of 30,000 cm/sec with a corresponding decrease in pressure arising from the Bernoulli effect. This allows the formation of bubbles which implode with extreme energy as the product velocity decreases upon leaving the valve seat area. This promotes the creation of shock waves which induce shearing by collision; this process is known as cavitation. The efficiency of the Manton-Gaulin mill decreases with increasing viscosity arising from rapid dissipation of shear waves.

Although the Manton-Gaulin mill does not employ laminar flow as a shearing mechanism, assuming a laminar model may give an upper bound to the shear rate and shear stresses encountered upon cavitation. Because of the extreme pressure shearing of the order of magnitude of laminar stress may be encountered.

Assuming this and a reasonable distance between the valve and valve seat (100 microns) a shear rate may be estimated from manufacturer specifications as about 2.9 × 10⁶ sec⁻¹. The shear stress can then be shown to be 8.8 × 10⁷ dynes cm⁻².

From the foregoing it may be concluded that the Manton-Gaulin device has the following characteristics:
1. The Manton-Gaulin mill operates on the principle of cavitation involving extremely high particle velocities and turbulent flow.
2. The efficiency of the Gaulin apparatus decreases with increasing viscosity.
3. Clay particles in suspension experience high shear stresses and shear rates in the Gaulin apparatus, although these are not amenable to direct calculation.

## Claims

1. A method for treating a crude smectite-type clay to produce an organoclay having enhanced gelling properties, comprising the steps of:
a) dispersing the crude clay in water to form an aqueous suspension
b) separating non-clay components and abrasive elements from the suspension; and
c) reacting the thus-formed suspension of clay with a higher alkyl-containing quaternary ammonium compound to form an organo-clay without subjecting the clay/quaternary compound mixture to high speed fluid shear;
characterised in that the suspension of crude clay in water has a solids content of less than 10% by weight and in that prior to reaction of the clay with the ammonium compound, the suspension of clay is subjected to high speed fluid shear as a pumpable slurry by passing the suspension through a narrow gap across which a pressure differential of at least 1000 p.s.i.g. (7 MPa) is maintained.

2. A method in accordance with claim 1, characterised in that said high speed fluid shear includes impacting the clay at a high velocity beyond said gap, against a hard surface to effect further shearing and comminution of said clay particles.

3. A method in accordance with claim 1 or 2, characterised in that pressure differential is no greater than 8,000 p.s.i.g. (56 MPa).

4. A method in accordance with any preceding claim, characterised in that the pressure differential is in the range of 4,000 to 6,000 p.s.i.g. (28 to 42 MPa).

5. A method in accordance with any one of claims 1, 2, 3 or 4 characterised in that said shearing and impacting is effected in a homogenizing mill.

6. A method according to any one of the preceding claims, wherein the aqueous suspension of clay to be subjected to high speed fluid shear has a solids content in the range of from 4 to 5%.

## Patentansprüche

1. Verfahren zur Behandlung eines rohen Smektit-Typ-Tons zur Herstellung eines Organotons mit verbesserten Gelierungseigenschaften, umfassend die Schritte:
a) Dispergieren des rohen Tons in Wasser, um eine wäßrige Suspension zu bilden
b) Abtrennung von Nicht-Tonbestandteilen und abschleifenden Anteilen aus der Suspension; und
c) Reaktion der derart gebildeten Tonsuspension mit einer höher alkylhaltigen quaternären Ammoniumverbindung um einen Organoton zu bilden, ohne das Gemisch von Ton und quaternärer Verbindung einer Hochgeschwindigkeitsflüssigkeitsscherung zu unterwerfen,
**dadurch gekennzeichnet,** daß die Suspension des rohen Tons in Wasser einen Feststoffgehalt von weniger als 10 Gew.-% aufweist und daß vor der Reaktion des Tons mit der Ammoniumverbindung, die Suspension des Tons als ein pumpbarer Schlamm mittels Durchleiten der Suspension durch eine enge Öffnung einer Hochgeschwindigkeitsflüssigkeitsscherung unterworfen wird, wobei ein Druckunterschied von wenigstens 1000 p.s.i.g. (7 MPa) aufrechterhalten wird.

2. Verfahren gemäß Anspruch 1,
**dadurch gekennzeichnet,** daß die Hochgeschwindigkeitsflüssigkeitsscherung ein Aufschlagen des Tons mit einer hohen Geschwindigkeit, hinter der Öffnung, gegen eine harte Oberfläche umfaßt, um eine weitere Scherung und Zerkleinerung der Tonpartikel zu bewirken.

3. Ein Verfahren gemäß Anspruch 1 oder 2,
**dadurch gekennzeichnet,** daß der Druckunterschied nicht größer als 8000 p.s.i.g. (56 MPa) ist.

4. Ein Verfahren gemäß irgendeinem vorhergehenden Anspruch,
**dadurch gekennzeichnet,** daß der Druckunterschied in dem Bereich von 4000 bis 6000 p.s.i.g. (28 bis 42 MPa) ist.

5. Ein Verfahren gemäß irgendeinem der Ansprüche 1, 2, 3 oder 4,
**dadurch gekennzeichnet,** daß die Scherung und das Aufschlagen in einer Homogenisierungsmühle bewirkt werden.

6. Verfahren gemäß irgendeinem der vorhergehenden Ansprüche, worin die wäßrige Suspension des Tons, die der Hochgeschwindigkeitsflüssigkeitsscherung unterworfen wird, einen Feststoffgehalt in dem Bereich von 4 bis 5% hat.

## Revendications

1. Procédé de traitement d'une argile brute de type smectite destiné à produire une organoargile présentant des propriétés de gélification améliorées, consistant à :
(a) disperser l'argile brute dans l'eau pour former une suspension aqueuse ;
(b) séparer les composants non-argileux et les éléments abrasifs de la suspension ; et
(c) faire réagir la suspension d'argile ainsi formée avec un composé d'ammonium quaternaire contenant un alcoyle supérieur pour former une organoargile, sans soumettre le mélange argile/composé d'ammonium quaternaire à un cisaillement fluide à grande vitesse ;
caractérisé en ce que la suspension d'argile brute dans l'eau a une teneur en solides de moins de 10 % en poids et qu'avant réaction de l'argile avec le composé d'ammonium, l'on soumet la suspension d'argile sous forme de boue pompable à un cisaillement fluide de grande vitesse en la faisant passer à travers un espace étroit dans lequel on maintient un différentiel de pression d'au moins 1.000 psig (7 MPa).

2. Procédé selon la revendication 1, caractérisé en ce que ledit cisaillement fluide à grande vitesse consiste à créer un impact de l'argile à grande vitesse contre une surface dure située au-delà dudit espace étroit, de manière à provoguer un cisaillement et une micronisation supplémentaire desdites particules d'argile.

3. Procédé selon la revendication 1 ou 2, caractérisé en ce que ce différentiel de pression n'est pas supérieur à 8.000 psig (56 MPa).

4. Procédé selon l'une quelconque des revendications précédentes, caractérisé en ce que ce différentiel de pression est de l'ordre de 4.000 à 6.000 psig (28 à 42 MPa).

5. Procédé selon l'une quelconque des revendications 1 à 4, caractérisé en ce que lesdits cisaillement et impact sont effectués dans un homogénéiseur.

6. Procédé selon l'une quelconque des revendications précédentes, où la suspension aqueuse d'argile soumise à cisaillement fluide à grande vitesse a une teneur en solides de l'ordre de 4 à 5 %.
